# EUROPEAN PATENT SPECIFICATION

(11) **EP 2 470 582 B1**
(45) Date of publication and mention of the grant of the patent: **27.05.2015**
(21) Application number: 09791829.6
(22) Date of filing: 24.08.2009
(51) Int. Cl.: C08G 59/00, C08G 59/06

(54) **METHOD OF MAKING A PARTICULATE EPOXY RESIN**
VERFAHREN ZUR HERSTELLUNG EINES PARTIKELFÖRMIGEN EPOXIDHARZES
PROCÉDÉ DE FABRICATION D'UNE RÉSINE ÉPOXY PARTICULAIRE

(43) Date of publication of application: 04.07.2012
(73) Proprietor: Dow Global Technologies LLC, Midland, MI 48674 (US)
(72) Inventor: GU, Leming, Lake Jackson, TX 77566 (US); CARLBERG, Philip, Lake Jackson, TX 77566 (US); BUROW, David, Lake Jackson, TX 77566 (US)
(74) Representative: Beck Greener
(86) International application number: PCT/US2009/054731
(87) International publication number: WO 2011/025472

(56) References cited:
- WO-A1-94/06876
- GB-A- 1 088 396
- JP-A- 60 163 916
- US-A- 3 296 157
- US-A- 4 122 067

## Description

This invention relates generally to a method of making a (particulate) epoxy resin. The method uses a dispersion promoting agent whose solubility in water decreases with increasing temperature.

Commercially-produced epoxy resins are usually made by either (A) reacting a bisphenol (e.g. bisphenol A) and a low molecular weight liquid epoxy resin at high temperature or (B) directly by condensation of a bisphenol and epichlorohydrin in an aqueous slurry. In both alternatives it is difficult to heat or cool the reaction mixture through the reactor walls. Effective agitation is also a problem due to the viscous nature of the reaction mixtures. Further, for route (A) the necessary high temperature may lead to undesired side reactions and catalyst deactivation. Additional drawbacks for route (B) include the necessary salt removal, resin separation/recovery and difficulties in attaining a relatively high molecular weight product.

U.S. Patent No. 3,296,157 to Brojer et al., the teachings of which are incorporated herein by reference, discloses a method of manufacturing epoxy resins having a softening point of 50°C to 160°C. Brojer et al. reacts a bisphenol with a compound such as epichlorohydrin in the presence of aqueous caustic alkali and a water-soluble organic polymer in an amount which is effective to form a protective colloid, thereby obtaining the thus formed resin as a suspension of stirrable beads. As specific examples of water-soluble organic polymers Brojer et al. mentions polyvinyl alcohol and the sodium salt of carboxymethylcellulose.

British Patent (GB) 1,088,496 teaches a process for producing a condensation product from a dihydric phenolic compound and an epihalohydrin using an alkaline condensation agent in the presence of an emulsifier and/or a protective colloid and in the presence of a solvent miscible with water and water.
US4122067 discloses Polyhydroxypolyether resins prepared by reacting in water as a dispersion an epoxide compound which has more than one 1,2-epoxy group per molecule with a dihydric phenol, in the presence of a nonionic dispersant at a temperature of 80 DEG C. to about 100 DEG C. using an organic phosphine, a tertiary amine, or a quaternary ammonium or phosphonium compound as a catalyst,
WO9406876 discloses aqueous primer compositions for promoting the bonding of a metal, prepared by dispersing one or more solid epoxy resins and a solid curing agent into water such that the particle sizes of the solids are less than 30 (my)m.
GB1088396 describes 9 - amino - 9 - aza - bicyclo[3,3,1]-nonane and acid addition salts, prepared by reducing the corresponding 9-nitroso-9-aza-bicyclo[3,3,1]nonane and, if desired, treating with inorganic acid.
US3296157 discloses a method of manufacturing and separating hard epoxide resins, by heating and mixing a dihydric phenol with a chlorohydrin selected from glycerol-dichlorohydrin and epichlorohydrin in the presence of aqueous caustic alkali and in the presence of a water soluble, organic polymer in an amount to form a protective colloid, whereby the epoxide resin is obtained as a suspension of beads in the aqueous mixture. JPS60163916 describes a process for obtaining spherical organic particles of an epoxy resin of an average particle diameter of 0.5-50mu, by adding an amine compound to an uncured epoxy resin emulsion containing a surfactant and curing the resin into particles.

According to the invention, there is provided a method of making an epoxy resin by a condensation of at least one polyphenolic compound and at least one condensation compound selected from epichlorohydrin, 1,3-dichloro-2-propanol, and homologs thereof in water that is free of added organic solvent at an elevated temperature of at least 30°C and in the presence of a catalyst, wherein the method comprises carrying out the condensation in the presence of at least one dispersion promoting agent which is a cellulose ether comprising a C₁₋₄ alkyl and/or C₁₋₄ hydroxyalkyl group whose solubility in water decreases with increasing temperature.
No organic solvent is added to water to form an aqueous phase for use in the above method. An organic solvent may interfere with the effects of the dispersion promoting agents. An organic solvent may also increase the cost of volatile removal and waste stream treatment.

In some variations, the aforementioned method may comprise (i) forming, at a temperature below the elevated temperature, of a dispersion of the at least one condensation compound in water that is free of added organic solvent, which dispersion comprises, in addition to water, the at least one polyphenolic compound, the catalyst, and the at least one dispersion promoting agent and (ii) heating such dispersion to the elevated temperature.

In some variations, the aforementioned method may comprise (i) forming, at a temperature below the elevated temperature, a dispersion of the epichlorohydrin in an aqueous alkali hydroxide solution which comprises water (with no added organic solvent), the at least one polyphenol and the at least one dispersion promoting agent and (ii) heating such dispersion to the elevated temperature.

The invention also includes an epoxy resin that results from various methods and variations thereof presented herein. The epoxy resin is preferably a particulate material with an as-formed average particle size within a range of from 10 nanometers (nm) to 1000 micrometers (µm), more preferably from 10 µm to 500 µm. The epoxy resin preferably has a number average molecular weight (Mn) of from 1500 grams per mole (g/M) to 3000 g/M and/or a weight average molecular weight (Mw) of from 3000 g/M to 7000 g/M.

Unless otherwise stated, a reference to a compound or component includes the compound or component by itself, as well as in combination with other compounds or components, such as mixtures of compounds.

Recitation of numerical ranges within this specification equates to a disclosure of all numerical values and ranges within that range as well as end points of such range. For example, if a range is from 1 to 50, it includes, for example, 1, 7, 34, 46.1, 23.7, or any other value or range within the range.

Examples of suitable polyphenolic compounds include bisphenols (diphenols). In addition, substances with a higher number of phenolic hydroxy groups per molecule than two (2), (e.g., novolac resins, especially preferably low molecular weight novolac resins) may also be employed, either alone or in combination with one or more bisphenols. In addition, non-phenolic polyhydroxy compounds such as 1,4-bis(hydroxymethyl)benzene, 1,3-bis(hydroxymethyl)benzene, 1,4-bis(hydroxymethyl)-cyclohexane, 1,3-bis(hydroxymethyl)cyclohexane hexanediol, and cyclohexanediol, may also be present in the reaction mixture. One or more bisphenols usually accounts for at least (≥) 30 wt%, preferably ≥ 50 wt%, more preferably ≥ 70 wt%, and still more preferably ≥ 90 wt%, based upon total weight of polyphenolic compounds present in the reaction mixture.

Examples of suitable bisphenols include bisphenol A, brominated bisphenol A, bisphenol F, bisphenol K (4,4'-dihydroxybenzophenone), bisphenol S (4,4'-dihydroxyphenyl sulfone), hydroquinone, resorcinol and 1,1-cyclohexanebisphenol. Bisphenol A is a preferred bisphenol for use in the present invention.

Suitable condensation compounds include at least one of epichlorohydrin, 1,3-dichloro-2-propanol, epihalohydrin and homologs of these compounds, with epichlorohydrin being a preferred condensation compound. Other condensation compounds such as diepoxy compounds (e.g., cyclooctene diepoxide, divinylbenzene diepoxide, 1,7-octadiene diepoxide, 1,3-butadiene diepoxide, 1,5-hexadiene diepoxide, and the diepoxide of 4-cyclohexenecarboxylate 4-cyclohexenylmethyl ester); as well as glycidyl ether derivatives of novolacs such as phenol novolac, cresol novolac and bisphenol A novolac may also be present. Epichlorohydrin usually accounts for ≥ 30 wt%, preferably ≥ 50 wt%, more preferably ≥ 70 wt%, and still more preferably ≥ 90 wt% of all condensation compounds present in the reaction mixture.

The reaction mixture includes the one or more condensation compounds in a concentration of ≥ 10 wt%, preferably ≥ 15 wt%, more preferably ≥ 20 wt%, and still more preferably ≥ 30 wt%, but usually no higher than (≤) 90 wt%, preferably ≤ 70 wt%, more preferably ≤ 50 wt%, and still more preferably ≤ 40 wt%, based on total reaction mixture (condensation compound, polyphenolic compound, water, dispersion promoting agent, and catalyst) weight.

The condensation compound and the polyphenolic compound are preferably present in concentrations such that a ratio of (a) number of epoxy groups (and/or groups equivalent thereto) of the at least one condensation compound to (b) number of (phenolic) hydroxy groups of at least one polyphenolic compound in an initial reaction mixture is preferably ≥ 0.5:1, more preferably ≥ 0.6:1, still more preferably ≥ 0.65:1 and even more preferably ≥ 0.7:1, but preferably ≤ 5:1, more preferably ≤ 2.5:1, still more preferably ≤ 1.5:1, even more preferably ≤ 1.25:1, and yet more preferably ≤ 1:1. Using, as an example, epichlorohydrin as the condensation compound and Bisphenol A as the polyphenolic compound, epichlorohydrin has one epoxy group and Bisphenol A has two hydroxy groups, which provides a ratio of 0.5:1.

If one chooses to express content of the condensation compound and the polyphenolic compound molar ratio basis, the compounds are present in a ratio of the former to the latter within a range of from 1:1 to 10:1, preferably from 1:1 to 1.3:1.

Any compound capable of catalyzing a condensation reaction of the condensation compound and the polyphenolic compound in water can be used as the catalyst. Non-limiting examples include inorganic compounds that dissolve in water to form an alkaline solution, e.g. oxides and hydroxides of metals such as lithium (Li), sodium (Na), potassium (K), magnesium (Mg), calcium (Ca), zinc (Zn) and aluminum (Al). Preferred catalysts include oxides and hydroxides of alkali metals (especially Li, Na and K) and alkaline earth metals (especially Mg and Ca) . The catalyst is more preferably sodium hydroxide (NaOH) or potassium hydroxide (KOH), with NaOH being especially preferred.

Typically employ the one or more catalysts in an amount such that the molar ratio of catalyst(s) such as NaOH or KOH to epoxy (and/or equivalent) groups of the condensation compound(s) is not higher than (10 : 1), e.g., not higher than (5. : 1), not higher than (3 : 1), not higher than (2 : 1) or not higher than (1.5 : 1), but not lower than (0.5 : 1), e.g., not lower than (0.7 : 1), not lower than (0. 9 : 1), or not lower than (1 : 1).

The catalyst and the condensation compound are present in amounts that provide a molar ratio of catalyst to condensation compound epoxy groups (and/or groups equivalent thereto) of from 10 :1 to 0.7 : 1, preferably from 1.5:1 to 1:1.

The dispersion promoting agent has a solubility in water which decreases with increasing temperature. Solubility of the dispersion promoting agent in an amount of water may, for example, be significantly higher at 20°C than its solubility in the same amount of water at 50°C, e.g., by a factor of ≥ 1.5, preferably ≥ 2, more preferably ≥ 3, still more preferably ≥ 4, even more preferably ≥ 5, yet more preferably ≥ 10, and further more preferably ≥ 20, or even higher.

The dispersion promoting agentsare cellulose ethers which comprise one to four carbon atoms (C₁₋₄) alkyl and/or C₁₋₄ hydroxyalkyl groups such as, methylcellulose, ethylcellulose, propylcellulose, hydroxymethylcellulose, hydroxyethylcellulose, hydroxypropylcellulose and hydroxypropylmethylcellulose. Preferred dispersion promoting agents include hydroxyalkylcellulose materials such as hydroxymethylcellulose, hydroxyethylcellulose, hydroxypropylcellulose and hydroxypropylmethylcellulose.

The dispersion promoting agents used in various aspects and variations of this appear to differ from polymers specifically mentioned in U.S. Patent No. 3,296,157, i.e., polyvinyl alcohol (PVA) and the sodium salt of carboxymethylcellulose (CMC), in that solubility of the latter polymers does not decrease with increasing temperature. The dispersion promoting agents described herein, i.e. those with a decreasing solubility in water with increasing temperature, appear to be absorbed at an interfacial area between an organic phase (comprising, e.g., epichlorohydrin) and a water phase (that contains no added organic solvent and comprises, e.g., a polyphenolic compound which is dissolved by means of the caustic catalyst) and, upon heating the reaction mixture, have a tendency to precipitate at the interfacial area, possibly due to their decreased solubility at the elevated temperature employed. This precipitation results in the formation of a protective polymer film which prevents the agglomeration of the epoxy resin which is being formed both at the interfacial area and inside dispersed droplets. Absent agglomeration, there appear to be minimal difficulties in mixing, mass and heat transfer as well as washing, neutralizing and resin recovery. Another potential advantage associated with the use of the dispersion promoting agents described herein is an ability to obtain higher epoxy resin molecular weights than one can obtain without such dispersion promoting agents.

The dispersion promoting agent(s) is present in a concentration that is preferably ≥ 0.02 wt%, more preferably ≥ 0.05 wt%, and still more preferably ≥ 0.1 wt%, but preferably ≤ 2 wt%, more preferably < 1 %, and still more preferably ≤ 0.5 % by weight, each based on the total weight of dispersion promoting agent, polyphenolic compound(s) and the condensation compound(s)

The reaction mixture may contain one or more additional substances that differ from a polyphenolic compound, a condensation compound, a catalyst and a dispersion promoting agent. Non-limiting examples of such substances include dispersants and emulsifiers such as quaternized or hydrophobically modified cellulose ethers, water soluble polyethylene glycol copolymers, water soluble polyethylene glycols with functional end group, water soluble polyethylene oxide copolymers, and inorganic salts such as, e.g., carbonates, phosphates, and sulfates of alkaline earth metals (for example, calcium phosphate (Ca₃PO₄), magnesium carbonate (MgCO₃), calcium carbonate (CaCO₃), barium carbonate (BaCO₃) and calcium sulfate (CaSO₄)). These substances will usually be employed, if at all, in a concentration which is ≥ 0.02 wt%, preferably ≥ 0.05 wt%, and more preferably ≥ 0.1 wt%, but ≤ 2 wt%, preferably ≤ 1 wt %, more preferably ≤ 0.5 wt%, each based on the total weight of polyphenolic compounds and condensation compounds present in the reaction mixture.

The elevated (reaction) temperature is preferably ≥ 30 degrees centigrade (°C), more preferably ≥ 40°C, still more preferably > 50°C, even more preferably ≥ 60°C, and yet more preferably ≥ 70°C. The elevated temperature is preferably ≤ 150°C, more preferably ≤ 140°C, and still more preferably ≤ 130°C.

Typically practice the method of this invention at atmospheric pressure, but superatmospheric pressure (e. g. up to five (5) atmospheres (490.33 kilopascals) may also be used.

Epoxy resin recovery employs standard procedures such as separation from the reaction mixture (e.g., by filtration), washing/neutralizing and drying. A non-limiting example of a suitable neutralizing agent (for neutralizing excess catalyst) is sodium hypophosphate (NaH₂PO₄) in, for example, a 25 % water solution.

The epoxy resin preferably has a particle size distribution where ≥ 98 % of the particles (and preferably up to 100 % of the particles) have an as-formed particle size (diameter) ≥ 10 nm, more preferably ≥ 20 nm, but ≤ 1000 µm, preferably ≤ 900 µm, or and more preferably ≤ 800 µm. Alternatively, the particles preferably have an average particle size ≥ 10 µm, more preferably ≥ 50 µm, and preferably ≤ 500 µm, more preferably ≤ 300 µm, and still more preferably ≤ 200 µm. Measure particle size distribution by, for example, using a Beckman Coulter dynamic image analyzer with RapidVue 2.006 software.

The epoxy resin has an average molecular weight that can vary over a wide range. The number average molecular weight (Mn) is preferably ≥ 1500, more preferably ≥ 1800, and still more preferably ≥ 2000, but preferably ≤ 4000, more preferably ≤ 3000, and still more preferably ≤ 2500. The weight average molecular weight (Mw) is preferably ≥ 3000, more preferably ≥ 3500, still more preferably ≥ 4000, even more preferably ≥ 4500, and yet more preferably ≥ 5000, but preferably ≤ 7000, more preferably ≤ 6500, and still more preferably ≤ 6000. Skilled artisans recognize that molecular weight is a dimensionless number even though some express molecular weights in terms of Daltons or grams per mole.

### Example (Ex) 1

To a 1L round bottom flask equipped with an overhead stirring apparatus, a cooling condenser and a heating mantle, add 300 grams (g) of deionized water, 28.1 g of 50% NaOH, and 64.1 g of Bisphenol A to form a reaction mixture. Heat the reaction mixture, with agitation at a rate of 570 revolutions per minute (rpm), to 50°C under a continuous nitrogen purge. After the Bisphenol A completely dissolves, cool the reaction mixture (flask contents) to 40°C, then add 75 g of a 0.33% hydroxypropylmethylcellulose (HPMC) (Methocel®F75M, The Dow Chemical Company, a 2% water solution is 75,000 centipoises (75,000 millipascal seconds (mPa·s))) water solution to the flask. Agitate the flask contents for five (5) minutes (min.), then add 32.5 g of epichlorohydrin to the flask. Heat the flask contents (organic phase and water phase), with stirring, to 95°C and maintain that temperature for 160 minutes. Cool flask contents 70°C, then drain the flask of its contents, and wash the flask with 350 g of deionized water 3 times, adding the wash to the flask contents. Neutralize excess NaOH in the resin with 25% NaH₂PO₄ solution, then separate resultant epoxy resin powder filtration and vacuum dry the powder at room temperature overnight. The dried powder has an average particle size of 100 µm.

### Ex 2

Replicate Ex 1 with changes. Increase the amount of 50% NaOH to 30.8 g and decrease the amount of HPMC solution to 60 g. The dried powder (white) has an average particle size of 250 µm, a Mn of 1970 and a Mw of 3970.

### Ex 3

Replicate Ex 1 with changes. Increase the amounts of deionized water and 50% NaOH respectively to 350 g and 32.4 g. Mix 32.5 g of epichlorohydrin with 37.5 g of the 0.33% HPMC solution in a first beaker, then add beaker contents to the flask in place of the 75 g of HPMC solution. In a second beaker, dissolve 0.64 g of a cationic hydroxyethyl cellulose (HEC) in 10 g of water and add the second beaker contents to the flask after the first flask contents addition. Reduce the time at 95°C to 120 minutes. The dried powder (white) has an average particle size of 338 µm, a Mn of 1920 and a Mw of 3520.

### Ex 4

Replicate Ex 3 with changes. In the first beaker, mix 32.5 g of epichlorohydrin with 5 g of a 2% solution of a different HPMC (METHOCEL™ F50, The Dow Chemical Company, viscosity of a 2% water solution is 50 centipoises (50 mPa·s)) and an additional 75g water. The dried powder (white) has an average particle size of 423 µm, a Mn of 1850 and a Mw of 3490.

### Ex 5

Replicate Ex 4, but reduce the amount of the cationic HEC to 0.48 g. The dried powder (white) has an average particle size of 448 µm, a Mn of 1860 and a Mw of 3500.

### Ex 6

Replicate Ex 4, but use a different cellulose ether (HPMC) (METHOCEL™ K100, The Dow Chemical Company, viscosity of a 2% water solution is 100 centipoises (100 mPa·s). The dried powder (white) has an average particle size of 338 µm, a Mn of 2070 and a Mw of 3900.

### Ex 7

Replicate Ex 6, but reduce the amount of the cationic HEC to 0.48 g. The dried powder (white) has an average particle size of 438 µm, a Mn of 2130 and a Mw of 3880. Ex 8

Replicate Ex 6, but reduce the amount of the cationic HEC to 0.36 g. The dried powder (white) has an average particle size of 407 µm, a Mn of 1980 and a Mw of 3480.

Ex 1 through Ex 8 above show that use of a dispersion promoting agent that has a decreasing solubility with increasing temperature helps produce a relative large particle size epoxy resin that is easily recovered and has a reasonably uniform particle size. By way of contrast Ex 9 (comparative) and Ex 10 (comparative) show that Na-CMC and a polyethylene glycol, respectively, provide low product recovery (90% loss in Ex 9) or large coagulates that are not readily recovered via filtration and washing (Ex 10).

### Ex 9 (Comparative)

Replicate Ex 1 with changes. Reduce deionized water addition to 250 g and increase the temperature used for Bisphenol A dissolution to 56°C. Substitute 6 grams of 1% water solution of a sodium salt of carboxymethyl cellulose (Na-CMC) for the HPMC solution. Addition of the Na-CMC solution prompts formation of a white dispersion. Filtration, as in Ex 1, yields only 6 g of fine white powder, the majority (approximately 90 wt%) of the product being a very fine white powder that rapidly clogs the filter. The powder that passes through the filter has an average particle size of 240 µm, a Mn of 1320 and a Mw of 2960.

### Ex 10 (Comparative)

Replicate Ex 1, but substitute 0.48 g of a polyethylene glycol (MPEG 4000, The Dow Chemical Company) for the HPMC. During heating, an initially formed dispersion collapses into large coagulates. Abort this example without product recovery. Similar results follow with substitution of other glycols for the MPEG 4000.

### Ex 11 (Comparative)

Replicate Ex 1, but substitute 0.48 g of an ethylene oxide propylene oxide block copolymer (ATSURF™ 108) for the HPMC. During heating, an initially formed dispersion collapses into large coagulates. Abort this example without product recovery.

## Claims

1. A method of making an epoxy resin by a condensation of at least one polyphenolic compound and at least one condensation compound selected from epichlorohydrin, 1,3-dichloro-2-propanol, and homologs thereof in water that is free of added organic solvent at an elevated temperature of at least 30°C and in the presence of a catalyst, wherein the method comprises carrying out the condensation in the presence of at least one dispersion promoting agent which is a cellulose ether comprising a C₁₋₄ alkyl and/or C₁₋₄ hydroxyalkyl group whose solubility in water decreases with increasing temperature.

2. The method of claim 1, wherein the at least one polyphenolic compound comprises bisphenol A.

3. The method of Claim 1 or Claim 2, wherein the catalyst comprises one or more compounds selected from hydroxides and oxides of alkali and alkaline earth metals.

4. The method of any of Claims 1 to 3, wherein the catalyst comprises sodium hydroxide.

5. The method of Claim 1, wherein the at least one cellulose ether comprises a C₁₋₄ hydroxyalkyl group.

6. The method of any one of Claims 1 to 5, wherein the cellulose ether is selected from hydroxymethylcellulose, hydroxyethylcellulose, hydroxypropylcellulose and hydroxypropylmethylcellulose.

7. The method of any one of Claims 1 to 6, wherein the elevated temperature is from 40°C to 150°C.

8. The method of any one of Claims 1 to 7, wherein the at least one dispersion promoting agent is employed in a concentration of from 0.02 % to 2 % by weight, based on a total weight of the at least one polyphenolic compound and the at least one condensation compound.

9. An epoxy resin having an as-formed particle size within a range of from 10 nanometers to 1000 micrometers, a number average molecular weight of from 1500 to 3000 and a weight average molecular weight of from 3000 to 7000.

## Patentansprüche

1. Ein Verfahren zur Herstellung eines Epoxidharzes durch eine Kondensation von mindestens einer Polyphenolverbindung und mindestens einer Kondensationsverbindung, ausgewählt aus Epichlorhydrin, 1,3-Dichlor-2-propanol und Homologen davon in Wasser, das frei von zugesetztem organischem Lösungsmittel ist, bei einer erhöhten Temperatur von mindestens 30 °C und in Gegenwart eines Katalysators, wobei das Verfahren das Durchführen der Kondensation in Gegenwart von mindestens einem dispersionsfördernden Mittel, das ein Celluloseether ist, beinhaltend eine C₁₋₄-Alkyl- und/oder C₁₋₄-Hydroxyalkylgruppe, deren Löslichkeit in Wasser mit steigender Temperatur sinkt, beinhaltet.

2. Verfahren gemäß Anspruch 1, wobei die mindestens eine Polyphenolverbindung Bisphenol A beinhaltet.

3. Verfahren gemäß Anspruch 1 oder Anspruch 2, wobei der Katalysator eine oder mehrere Verbindungen, ausgewählt aus Hydroxiden und Oxiden von Alkali- und Erdalkalimetallen, beinhaltet.

4. Verfahren gemäß einem der Ansprüche 1 bis 3, wobei der Katalysator Natriumhydroxid beinhaltet.

5. Verfahren gemäß Anspruch 1, wobei der mindestens eine Celluloseether eine C₁₋₄-Hydroxyalkylgruppe beinhaltet.

6. Verfahren gemäß einem der Ansprüche 1 bis 5, wobei der Celluloseether aus Hydroxymethylcellulose, Hydroxyethylcellulose, Hydroxypropylcellulose und Hydroxypropylmethylcellulose ausgewählt ist.

7. Verfahren gemäß einem der Ansprüche 1 bis 6, wobei die erhöhte Temperatur 40 °C bis 150 °C beträgt.

8. Verfahren gemäß einem der Ansprüche 1 bis 7, wobei das mindestens eine dispersionsfördernde Mittel in einer Konzentration von 0,02 Gew.-% bis 2 Gew.-%, bezogen auf ein Gesamtgewicht der mindestens einen Polyphenolverbindung und der mindestens einen Kondensationsverbindung, eingesetzt wird.

9. Ein Epoxidharz, das eine vorgebildete Partikelgröße in einem Bereich von 10 Nanometer bis 1000 Mikrometer, ein Zahlenmittel der Molmasse von 1500 bis 3000 und ein Gewichtsmittel der Molmasse von 3000 bis 7000 aufweist.

## Revendications

1. Une méthode pour réaliser une résine époxy par une condensation d'au moins un composé polyphénolique et d'au moins un composé de condensation sélectionné parmi l'épichlorhydrine, le 1,3-dichloro-2-propanol, et des homologues de ceux-ci dans de l'eau qui est dépourvue de solvant organique ajouté à une température élevée d'au moins 30 °C et en présence d'un catalyseur, la méthode comprenant le fait d'effectuer la condensation en présence d'au moins un agent promoteur de dispersion qui est un éther de cellulose comprenant un alkyle en C₁₋₄ et/ou un groupe hydroxyalkyl en C₁₋₄ dont la solubilité dans l'eau diminue avec une température en augmentation.

2. La méthode de la revendication 1, dans laquelle l'au moins un composé polyphénolique comprend du bisphénol A.

3. La méthode de la revendication 1 ou de la revendication 2, dans laquelle le catalyseur comprend un ou plusieurs composés sélectionnés parmi des hydroxydes et des oxydes de métaux alcalins et alcalinoterreux.

4. La méthode de n'importe lesquelles des revendications 1 à 3, dans laquelle le catalyseur comprend de l'hydroxyde de sodium.

5. La méthode de la revendication 1, dans laquelle l'au moins un éther de cellulose comprend un groupe hydroxyalkyl en C₁₋₄.

6. La méthode de n'importe laquelle des revendications 1 à 5, dans laquelle l'éther de cellulose est sélectionné parmi l'hydroxyméthylcellulose, l'hydroxyéthylcellulose, l'hydroxypropylcellulose et l'hydroxypropylméthylcellulose.

7. La méthode de n'importe laquelle des revendications 1 à 6, dans laquelle la température élevée va de 40 °C à 150 °C.

8. La méthode de n'importe laquelle des revendications 1 à 7, dans laquelle l'au moins un agent promoteur de dispersion est employé dans une concentration allant de 0,02 % à 2 % en poids, rapporté à un poids total de l'au moins un composé polyphénolique et de l'au moins un composé de condensation.

9. Une résine époxy ayant une taille de particule telle que formée dans les limites d'une gamme allant de 10 nanomètres à 1 000 micromètres, une masse moléculaire moyenne en nombre allant de 1 500 à 3 000 et une masse moléculaire moyenne en poids allant de 3 000 à 7 000.
